# EUROPEAN PATENT SPECIFICATION

(11) **EP 3 910 299 B1**
(45) Date of publication and mention of the grant of the patent: **18.10.2023**
(21) Application number: 21172765.6
(22) Date of filing: 07.05.2021
(51) Int. Cl.: G01F 23/296, G01F 23/2962

(54) **METHOD FOR MONITORING LIQUID LEVEL IN LIQUID TANK OF VEHICLE, STORAGE MEDIUM, CONTROL UNIT AND SCR SYSTEM**
VERFAHREN ZUR ÜBERWACHUNG DES FLÜSSIGKEITSSTANDS IN EINEM FLÜSSIGKEITSTANK EINES FAHRZEUGS, SPEICHERMEDIUM, STEUERUNGSEINHEIT UND SCR-SYSTEM
PROCÉDÉ DE SURVEILLANCE DE NIVEAU DE LIQUIDE DANS UN RÉSERVOIR DE LIQUIDE D'UN VÉHICULE, SUPPORT DE STOCKAGE, UNITÉ DE COMMANDE ET SYSTÈME DE RÉDUCTION CATALYTIQUE SÉLECTIVE

(30) Priority: 11.05.2020 CN 202010391754
(43) Date of publication of application: 17.11.2021
(73) Proprietor: Robert Bosch GmbH, 70442 Stuttgart (DE)
(72) Inventor: Liu, Yi, Jiangsu, 214028 (CN)

(56) References cited:
- WO-A1-2018/055128
- DE-A1-102016 219 834
- US-A1- 2019 032 958
- US-B2- 6 948 364
- US-B2- 9 038 442

## Description

### Technical field

The present application relates to a technology for monitoring a liquid level in a liquid tank, in particular an exhaust gas treatment fluid tank, of a vehicle, in particular a diesel vehicle according to the preamble of independent claim 1 which is known from WO 2018/055128 A1.
US 6 948 364 B2 discloses a liquid level detection system and, more particularly, a system for accurately measuring the depth of liquid contained within the vessel and a method for operating such a sensor.

### Background art

A vehicle engine generates exhaust gas with a high content of nitrogen oxides during operation. Such exhaust gas cannot be discharged into the atmosphere directly; it can only be discharged into the atmosphere after being processed by a selective catalytic reduction (SCR) system. In the case of a diesel vehicle, an effective technology for processing the exhaust gas discharged by the engine is to use the SCR method to reduce the content of nitrogen oxides in the exhaust gas. In the SCR method, harmful nitrogen oxides in the exhaust gas are converted to harmless nitrogen and steam by using an exhaust gas treatment fluid (generally an aqueous solution of urea) to process the exhaust gas in an SCR system, so as to reduce harmful gas emissions from the engine.

The SCR system generally comprises a liquid tank for holding exhaust gas treatment fluid, an injection means for injecting exhaust gas treatment fluid into the exhaust pipe, and a delivery means for drawing exhaust gas treatment fluid from the liquid tank and supplying it under pressure to the injection means. An ultrasonic sensor is arranged in the liquid tank, for detecting the liquid level of exhaust gas treatment fluid. Such an ultrasonic sensor measures the liquid level by means of the interface between the exhaust gas treatment fluid and air thereabove. However, when the liquid tank has been overfilled with exhaust gas treatment fluid, all of the air in the liquid tank has been squeezed out; there is no interface between exhaust gas treatment fluid and air, and no ultrasound is reflected back to the ultrasonic sensor, so the ultrasonic sensor is unable to detect the liquid level. Moreover, when the exhaust gas treatment fluid in the liquid tank has been over-depleted or emptied, the liquid level will fall below an ultrasound transmitting part of the ultrasonic sensor, and the ultrasonic sensor will likewise be unable to detect the liquid level. It is impossible to judge whether the liquid tank has been emptied using such a liquid level sensor alone.

### Summary of the invention

In view of the problems described above, the present application aims to provide a method for monitoring a liquid level in a liquid tank, in particular an exhaust gas treatment fluid tank, of a vehicle, in particular a diesel vehicle, in order to reliably judge whether the liquid tank has been emptied.

According the present application, a method is provided for monitoring a liquid level in a liquid tank of a vehicle, as defined in independent claim 1.

According to another aspect of the present invention, a machine-readable non-volatile storage medium is provided, having stored thereon program instructions for implementing the method described above, as defined in independent claim 5.

According to another aspect of the present invention, a control unit is provided, the control unit having a memory and a processor, the memory having stored therein executable program instructions which, when executed, cause the processor to implement the method described above, as defined in independent claim 6.

According to another aspect of the present application, a vehicle SCR system is provided, as defined in independent claim 7.

The method of the present application for monitoring a liquid level in a liquid tank, in particular an exhaust gas treatment fluid tank, of a vehicle, in particular a diesel vehicle, is able to judge whether the liquid tank has been emptied when an ultrasonic liquid level sensor is unable to detect the liquid level in the liquid tank. In addition, the method described above can also reliably judge which of the following filling states the liquid tank is in: 1) the liquid tank is an empty tank; 2) the liquid tank is over-filled; 3) the liquid level in the liquid tank has fallen below the ultrasound transmitting part of the ultrasonic liquid level sensor; and can thereby respond to different filling states in different ways, to guarantee normal operation of the vehicle system.

### Brief description of the drawings

A deeper understanding and knowledge of the abovementioned and other aspects of the present application will be gained below in conjunction with the drawings. It should be noted that the drawings are merely schematic, and are not drawn to scale. In the drawings:
Fig. 1 is a schematic diagram of an SCR system according to a preferred embodiment of the present application; and
Fig. 2 is a flow chart of a method for monitoring a liquid level in a liquid tank according to a preferred embodiment of the present application.

### Detailed description of the invention

Preferred embodiments of the present application are described in detail below in conjunction with examples. Those skilled in the art should understand that these exemplary embodiments do not limit the present application in any way.

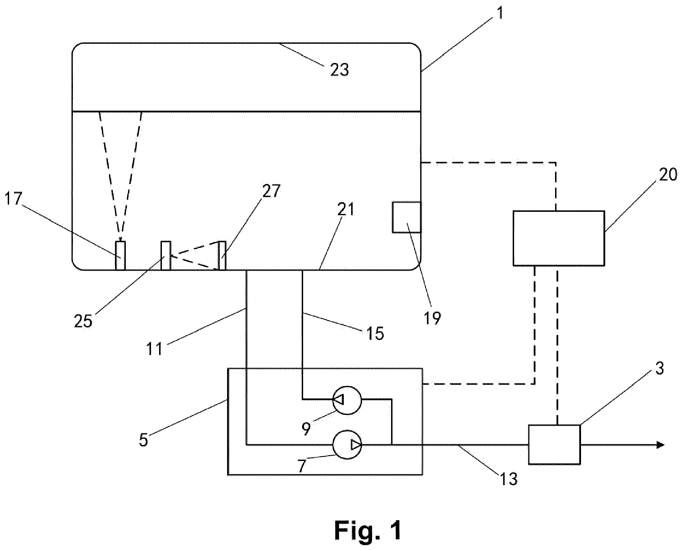

Fig. 1 shows schematically an exhaust gas SCR system for a vehicle, in particular a diesel vehicle, according to a preferred embodiment of the present application; this is linked to an exhaust pipe (not shown) of a vehicle engine, and configured to inject an exhaust gas treatment fluid (generally an aqueous solution of urea) into the exhaust pipe so as to reduce the content of nitrogen oxides in exhaust gas. The SCR system may comprise a liquid tank 1 for holding exhaust gas treatment fluid, an injection means 3 for injecting exhaust gas treatment fluid into the exhaust pipe, and a delivery means 5 for drawing exhaust gas treatment fluid from the liquid tank 1 and supplying it under pressure to the injection means 3. The delivery means 5 may comprise a supply pump 7 and a reverse-draw pump 9. When the SCR system is operating, the supply pump 7 in the delivery means 5 draws exhaust gas treatment fluid from the liquid tank 1 via a suction pipeline 11, pressurizes the exhaust gas treatment fluid and supplies it to the injection means 3 via a supply pipeline 13. The injection means 3 then atomizes the exhaust gas treatment fluid, and injects it quantitatively into the exhaust pipe. When the vehicle stops, the reverse-draw pump 9 in the delivery means 5 performs reverse-drawing so that exhaust gas treatment fluid returns to the liquid tank 1 via a return flow pipeline 15, in order to prevent deposition and crystallization, etc., of exhaust gas treatment fluid in the injection means 3 and delivery means 5.

Continuing to refer to Fig. 1, the SCR system may further comprise a first ultrasonic sensor 17, a heater 19, a second ultrasonic sensor 25 and a reflector 27, which are arranged in the liquid tank 1. The first ultrasonic sensor 17 may be configured to detect the liquid level of exhaust gas treatment fluid in the liquid tank 1. The heater 19 may be configured to heat exhaust gas treatment fluid in the liquid tank 1. The SCR system may further comprise a control unit 20, which is linked to the liquid tank 1, the first ultrasonic sensor 17, the heater 19, the second ultrasonic sensor 25, the injection means 3, the delivery means 5 and other functional elements of the SCR system, for the purpose of controlling their operation and monitoring their state. The control unit 20 may for example be an ECU of the vehicle.

Within the liquid tank 1, the first ultrasonic sensor 17 is mounted at the bottom 21, and may be configured to detect the liquid level of exhaust gas treatment fluid in the liquid tank 1 by transmitting ultrasound towards the top 23 of the liquid tank 1 and receiving an echo signal. Specifically, the first ultrasonic sensor 17 detects the liquid level by transmitting ultrasound towards the interface between exhaust gas treatment fluid in the liquid tank 1 and air thereabove, and receiving an echo signal reflected from the interface. The control unit 20 can determine the liquid level of exhaust gas treatment fluid in the liquid tank 1 by comparing the echo signal with a predetermined reference value. However, when the liquid tank 1 has been overfilled with exhaust gas treatment fluid, all of the air in the liquid tank 1 has been squeezed out; there is no interface between exhaust gas treatment fluid and air, and no ultrasound is reflected back to the first ultrasonic sensor 17, so the first ultrasonic sensor 17 is unable to detect the liquid level. Moreover, when the exhaust gas treatment fluid in the liquid tank 1 has been over-depleted or emptied (e.g. has been emptied manually or has leaked out completely due to damage), the liquid level will fall below an ultrasound transmitting part of the first ultrasonic sensor 17, and no ultrasound will be reflected back to the first ultrasonic sensor 17, so the first ultrasonic sensor 17 will be unable to detect the liquid level. It is impossible to judge whether the liquid tank 1 has been emptied using the first ultrasonic sensor 17 alone. In other words, when the first ultrasonic sensor 17 is unable to detect the liquid level, it is impossible to judge whether the liquid tank 1 is an empty tank. For example, in the case where it is necessary to judge the filling state in the liquid tank 1 when the vehicle is started, it will be impossible to judge whether the liquid tank 1 is an empty tank if the first ultrasonic sensor 17 is unable to detect the liquid level. When the first ultrasonic sensor 17 is unable to detect the liquid level, a judgement is made as to whether the liquid tank 1 is an empty tank. As stated above, the reason for emptying might be that the liquid tank 1 has been emptied manually or has leaked completely due to damage. In such situations, it is necessary to judge whether the liquid tank 1 is an empty tank, and if it is determined that the liquid tank 1 is an empty tank, then it will be necessary to remind the user to check the integrity of the liquid tank.

The control unit 20 of the present application is able to judge whether the liquid tank 1 is an empty tank (this can be called a first filling state) when the first ultrasonic sensor 17 is unable to detect the liquid level. When judging whether the liquid tank 1 is in the first filling state, the control unit 20 needs to make use of the second ultrasonic sensor 25. Within the liquid tank 1, the second ultrasonic sensor 25 is mounted at the bottom 21, and can be configured to determine whether exhaust gas treatment fluid is present below the ultrasound transmitting part of the first ultrasonic sensor 17 by transmitting ultrasound along the bottom 21 of the liquid tank 1 and receiving an echo signal, and thereby judge whether the liquid tank 1 is an empty tank. The second ultrasound sensor 25 can be arranged at a position lower than the ultrasound transmitting part of the first ultrasonic sensor 17. Preferably, the second ultrasound sensor 25 can be arranged at the lowest position at the bottom 21 of the liquid tank 1. The reflector 27 can be arranged facing the second ultrasonic sensor 25, and the second ultrasonic sensor 25 can be configured to determine the type of medium (e.g. gas and/or liquid) present between the second ultrasonic sensor 25 and the reflector 27 by transmitting ultrasound towards the reflector 27 and receiving an echo signal reflected from the reflector 27. Specifically, it is possible to judge whether exhaust gas treatment fluid is present between the second ultrasonic sensor 25 and the reflector 27 by comparing the echo signal with a predetermined reference value. This makes it possible to determine whether exhaust gas treatment fluid is present below the ultrasound transmitting part of the first ultrasonic sensor 17, and thereby judge whether the liquid tank 1 is in the first filling state, i.e. judge whether the liquid tank 1 is an empty tank. In one example, the reflector 27 is a plate extending from the bottom 21 of the liquid tank 1. In another example, the reflector 27 may be a plate extending from a sidewall of the liquid tank 1.

Upon discovering within a certain time period (e.g. about 300 seconds, but possibly more than 300 seconds or less than 300 seconds) that the first ultrasonic sensor 17 is unable to detect the liquid level, the control unit 20 activates the second ultrasonic sensor 25, so that it transmits ultrasound towards the reflector 27 and receives an echo signal, in order to judge whether the liquid tank 1 is in the first filling state. Specifically, it is possible to judge whether exhaust gas treatment fluid is present below the ultrasound transmitting part of the first ultrasonic sensor 17 by comparing the echo signal of the second ultrasonic sensor 25 with a predetermined reference value. When it is determined that no exhaust gas treatment fluid is present below the ultrasound transmitting part of the first ultrasonic sensor 17, it can be determined that the liquid tank 1 is in the first filling state, i.e. the liquid tank 1 is an empty tank. However, if it is determined that exhaust gas treatment fluid is present below the ultrasound transmitting part of the first ultrasonic sensor 17, then two states are possible: 1) the liquid tank 1 has been over-filled (this can be called a second filling state); or 2) the liquid level in the liquid tank 1 has fallen below the ultrasound transmitting part of the first ultrasonic sensor 17 but has not been emptied (this can be called a third filling state).

In such a situation, the control unit 20 needs to make use of the operation of the heater 19 in order to further judge whether the liquid tank 1 is in the second filling state or the third filling state. Specifically, the heater 19 has different operating (heating) states when surrounded by exhaust gas treatment fluid and when not surrounded by exhaust gas treatment fluid, and in particular has different temperature increase rates and operating currents, etc. For example, when the heater 19 is surrounded by exhaust gas treatment fluid, the temperature increase rate of the heater 19 is slower (stable heating), whereas when the heater 19 is not surrounded by exhaust gas treatment fluid, the temperature increase rate of the heater 19 is sharply accelerated (unstable heating).

The heater 19 may for example be a PTC (positive temperature coefficient) heater, having a heating element made of a PTC material; the resistance of this material increases with temperature. If such a material is used, when the exhaust gas treatment fluid rises to a certain temperature, the resistance of the heating element increases and the current decreases, such that the power of the heater 19 falls, thereby avoiding overheating of the exhaust gas treatment fluid; thus, the heater 19 has a self-regulating function. When the heater 19 is not surrounded by exhaust gas treatment fluid, the temperature increase rate of the PTC heater 19 will be very fast, and the operating current will fall rapidly.

The control unit 20 judges whether the liquid tank 1 is in the second filling state or the third filling state according to the heating state of the heater 19. For this purpose, the heater 19 is arranged at a position higher than the ultrasonic transmitting part of the first ultrasonic sensor 17. For example, the heater 19 is mounted on a sidewall 1 of the liquid tank 1.

When the control unit 20 needs to further judge whether the liquid tank 1 is in the second filling state or the third filling state, i.e. when the liquid level cannot be detected by means of the first ultrasonic sensor 17, and it is determined by means of the second ultrasonic sensor 25 that exhaust gas treatment fluid is present below the ultrasonic transmitting part of the first ultrasonic sensor 17, the control unit 20 activates the heater 19 or maintains the heating state of the heater 19, and monitors the heating state of the heater 19, in order to judge whether the liquid tank 1 is in the second filling state or the third filling state. Specifically, when the control unit 20 detects a stable heating state of the heater 19, it can be determined that the liquid tank 1 is in the second filling state, whereas in an unstable heating state, it can be determined that the liquid tank 1 is in the third filling state. For example, in the stable heating state of the heater 19, the temperature of the heater 19 rises normally, and it is thereby possible to determine that the liquid level of exhaust gas treatment fluid is also present above the ultrasonic transmitting part of the first ultrasonic sensor 17, and thus determine that the liquid tank 1 has been over-filled (the second filling state). In the unstable heating state of the heater 19, the temperature of the heater 19 rises too quickly, and it is thereby possible to determine that the liquid level in the liquid tank 1 has fallen below the ultrasound transmitting part of the first ultrasonic sensor 17 but has not been emptied (the third filling state). If the heater 19 is a PTC heater, the control unit 20 detects the operating current of the heater 19; if the rate at which the operating current decreases is normal, this indicates stable heating by the heater 19, and it can be determined that the liquid tank 1 is in the second filling state, but if it is detected that the operating current of the heater 19 is falling too quickly or has fallen below a predetermined minimum current value, this indicates unstable heating by the heater 19, and it can be determined that the liquid tank 1 is in the third filling state.

When the control unit 20 determines that the liquid tank 1 is in a first liquid level state, i.e. the liquid tank 1 is an empty tank, the control unit 20 can issue an alert to remind the user to check the liquid tank 1. If the SCR system has an automatic filling function, the control unit 20 can temporarily disable this function. If the user's check of the liquid tank 1 finds it to be intact, then the automatic filling function can be reenabled or manual filling can be performed; if the user finds that the liquid tank 1 is damaged, then it will be necessary to replace the entire liquid tank 1. When the control unit 20 determines that the liquid tank 1 is in a second liquid level state, i.e. the liquid tank 1 has been over-filled, the control unit 20 can remind the user that there is an ample supply of exhaust gas treatment fluid in the liquid tank 1 and maintain the heating state of the heater 19 (e.g. when the temperature is low). When the control unit 20 determines that the liquid tank 1 is in a third liquid level state, i.e. the liquid level in the liquid tank 1 has fallen below the ultrasound transmitting part of the first ultrasonic sensor 17 but has not been emptied, the control unit 20 can turn off the heater 19, and can issue an alert to remind the user to add exhaust gas treatment fluid to the liquid tank 1. If the SCR system has an automatic filling function, the control unit 20 can activate a filling operation of the liquid tank 1.

The SCR system of the present application can reliably judge whether the liquid tank 1 has been emptied when the first ultrasonic sensor 17 is unable to detect the liquid level in the liquid tank 1. In addition, the technology described above can reliably judge which of the following filling states the liquid tank 1 is in: 1) the liquid tank 1 is an empty tank; 2) the liquid tank 1 is over-filled; 3) the liquid level in the liquid tank 1 has fallen below the ultrasound transmitting part of the first ultrasonic sensor 17; and can thereby respond to different filling states in different ways, to guarantee normal operation of the vehicle system.

As will be understood, within the scope of the present application, those skilled in the art could make various alterations to the SCR system described above, in particular to the structure and function of the control unit 20. In addition, in some other embodiments, when exhaust gas treatment fluid is present between the second ultrasonic sensor 25 and the reflector 27, it is also possible to further determine the concentration of the exhaust gas treatment fluid according to the echo signal of the second ultrasonic sensor 25.

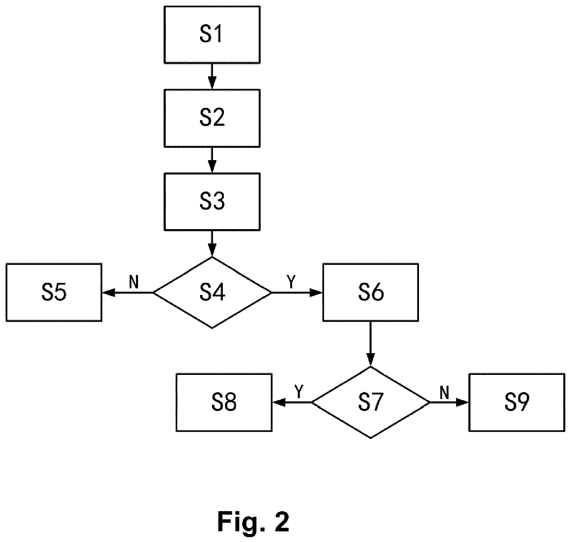

The present application further relates to a method for monitoring the liquid level in a liquid tank; optionally, the method can be applied in the SCR system described above, and can be implemented by means of the control unit 20 described above. One feasible procedure of the method is shown schematically in Fig. 2.

As shown in Fig. 2, in step S1, the first ultrasonic sensor 17 is caused to transmit ultrasound towards the top 23 of the liquid tank 1 and receive a first echo signal, in order to detect the liquid level in the liquid tank 1.

Next, in step S2, it is determined that the first ultrasound sensor 17 has not received the first echo signal within a period of time (e.g. about 300 seconds).

Next, in step S3, the second ultrasonic sensor 25 is caused to transmit ultrasound along the bottom 21 of the liquid tank 1 and receive a second echo signal.

Next, in step S4, based on the second echo signal, a judgement is made as to whether exhaust gas treatment fluid is present below the ultrasound transmitting part of the first ultrasonic sensor 17, in order to judge whether the liquid tank 1 is an empty tank.

If it is determined in step S4 that no exhaust gas treatment fluid is present below the ultrasound transmitting part of the first ultrasonic sensor 17, it can be determined that the liquid tank 1 is an empty tank, in which case step S5 is performed.

In step S5, an alert is issued to remind the user to check the liquid tank 1.

On the other hand, if it is determined in step S4 that exhaust gas treatment fluid is present below the ultrasound transmitting part of the first ultrasonic sensor 17, it can be determined that the liquid tank 1 has not been emptied, in which case step S6 is performed.

In step S6, the heater 19 in the liquid tank 1 is activated or the heating state of the heater 19 is maintained, and the heating state of the heater 19 is monitored.

Next, in step S7, a judgement is made as to whether the heating state of the heater 19 is stable heating. For example, a judgement is made according to whether the temperature increase rate of the heater 19 exceeds a predetermined temperature increase rate, whether the operating current decrease rate of the heater 19 exceeds a predetermined current decrease rate, or whether the operating current value of the heater 19 is lower than a predetermined minimum current value.

If it is determined in step S7 that the operating state of the heater 19 is stable heating (e.g. the temperature increase rate does not exceed the predetermined temperature increase rate, the operating current decrease rate does not exceed the predetermined current decrease rate, or the operating current value of the heater is not lower than the predetermined minimum current value), it can be determined that the liquid tank 1 has been over-filled, in which case step S8 is performed.

In step S8, the user is reminded that there is an ample supply of exhaust gas treatment fluid in the liquid tank 1, and the heating state of the heater 19 can be maintained (e.g. when the temperature is low).

On the other hand, if it is determined in step S7 that the operating state of the heater 19 is unstable heating (e.g. the temperature increase rate has exceeded the predetermined temperature increase rate, the operating current decrease rate has exceeded the predetermined current decrease rate, or the operating current value of the heater 19 is lower than the predetermined minimum current value), it can be determined that the liquid level in the liquid tank 1 has fallen below the ultrasound transmitting part of the first ultrasonic sensor 17 but has not been emptied, in which case step S9 is performed.

In step S9, the heater 19 is turned off, and an alert is issued to remind the user to add exhaust gas treatment fluid to the liquid tank 1. If the SCR system has an automatic filling function, a filling operation of the liquid tank 1 can be activated.

Furthermore, in order to avoid erroneous measurement, other steps may also be performed before performing steps S1 - S9. For example, before performing steps S1 - S9, a check is made to determine whether the first ultrasonic sensor 17, second ultrasonic sensor 25 and heater 19 are energized and/or whether they have reported errors. Furthermore, when the liquid in the liquid tank 1 solidifies due to low temperature (for example, the freezing point of an aqueous solution of urea is -11°C), the first ultrasonic sensor 17 is likewise unable to detect the liquid level. Thus, before performing steps S1 - S9, the temperature in the liquid tank 1 can be detected. If the temperature in the liquid tank 1 is lower than the freezing point, then the heater 19 can be activated first to perform heating, and steps S1 - S9 can then be performed.

It should be further understood that the method as shown in Fig. 2 may be executable program instructions stored on a machine-readable non-volatile storage medium. It should also be understood that the control unit 20 may have a memory and a processor, wherein the memory can have executable program instructions stored therein which, when executed, cause the processor to implement the method as shown in Fig. 2.

It must be pointed out that an exhaust gas SCR system for a vehicle, in particular a diesel vehicle, a control unit thereof and an associated method have been described above, and these are able to judge whether the liquid tank 1 has been emptied when an ultrasonic liquid level sensor is unable to detect the liquid level in the liquid tank. In addition, the technology described above can reliably judge which of the following filling states the liquid tank 1 is in: 1) the liquid tank 1 is an empty tank; 2) the liquid tank 1 is over-filled; 3) the liquid level in the liquid tank 1 has fallen below the ultrasound transmitting part of the ultrasonic liquid level sensor; and can thereby respond to different filling states in different ways, to guarantee normal operation of the vehicle system. Thus, the scope of the present application covers all kinds of scenarios in which the filling state is determined on the basis of ultrasonic sensors in the vehicle liquid tank and a possible heater.

It should also be understood that the first ultrasonic sensor 17 and second ultrasonic sensor 25 may be the same sensor. In this case, an ultrasound direction-changer can be used to enable the sensor to perform the functions of the first ultrasonic sensor 17 and second ultrasonic sensor 25 simultaneously.

The present application has been described in detail above in conjunction with particular embodiments. Obviously, all of the embodiments described above and shown in the drawings should be understood to be exemplary, without limiting the present application. A person skilled in the art could make various modifications or alterations to these embodiments without departing from the scope of the present application, as defined in the claims.

## Claims

1. Method for monitoring a liquid level in a liquid tank (1) of a vehicle, the liquid tank (1) having a first ultrasonic sensor (17) and a second ultrasonic sensor (25) which are mounted at the bottom (21) of the liquid tank (1), the first ultrasonic sensor (17) being configured to detect the liquid level in the liquid tank (1) by transmitting ultrasound towards the top (23) of the liquid tank (1) and receiving an echo signal, and the second ultrasonic sensor (25) being configured to judge whether liquid is present below an ultrasound transmitting part of the first ultrasonic sensor (17) by transmitting ultrasound along the bottom (21) and receiving an echo signal, the method comprising the following steps:
causing the first ultrasonic sensor (17) to transmit ultrasound and receive a first echo signal, in order to detect the liquid level in the liquid tank (1);
when the first ultrasonic sensor (17) has not received the first echo signal for a period of time, causing the second ultrasonic sensor (25) to transmit ultrasound and receive a second echo signal;
judging whether the liquid tank (1) is an empty tank on the basis of the second echo signal;
determining that the liquid tank (1) is an empty tank, when it is determined on the basis of the second echo signal that no liquid is present below the ultrasound transmitting part of the first ultrasonic sensor (17);
wherein
the liquid tank (1) further comprises a heater (19) for heating liquid in the liquid tank (1), the heater (19) being arranged at a position higher than the ultrasound transmitting part of the first ultrasonic sensor (17);
**characterized in that**
the method further comprises the following step:
when it is determined on the basis of the second echo signal that liquid is present below the ultrasound transmitting part of the first ultrasonic sensor (17), activating or maintaining heating of the liquid in the liquid tank (1) by the heater (19), and monitoring a heating state of the heater (19);
when it is determined that the heating state of the heater (19) is stable heating, it is determined that the liquid tank (1) is over-filled such that there is no interface between exhaust gas treatment fluid and air, and no ultrasound is reflected back to the ultrasonic sensor, so the first ultrasonic sensor is unable to detect the liquid level; and
when it is determined that the heating state of the heater (19) is unstable heating, it is determined that the liquid level in the liquid tank (1) has fallen below the ultrasound transmitting part of the first ultrasonic sensor (17) but has not been emptied.

2. Method according to Claim 1, **characterized in that** the method further comprises monitoring the heating state of the heater (19) on the basis of a heating temperature of the heater (19); determining that the heater (19) is in an unstable heating state when the rate of increase of the heating temperature exceeds a predetermined temperature increase rate value, and/or when the heating temperature exceeds a predetermined temperature value; and determining that the heater (19) is in a stable heating state when the rate of increase of the heating temperature does not exceed a predetermined temperature increase rate value, and/or when the heating temperature does not exceed a predetermined temperature value.

3. Method according to Claim 1, **characterized in that** the method further comprises monitoring the heating state of the heater (19) on the basis of variation of an operating current of the heater (19); determining that the heater (19) is in an unstable heating state when the rate of change of the operating current exceeds a predetermined current change rate value, or when the operating current reaches a predetermined limit current value; and determining that the heater (19) is in a stable heating state when the rate of change of the operating current does not exceed a predetermined current change rate value, or when the operating current does not reach a predetermined limit current value.

4. Method according to Claim 1, **characterized in that** the liquid tank (1) is an exhaust gas treatment fluid tank in a vehicle SCR system, and the liquid in the liquid tank (1) is exhaust gas treatment fluid.

5. Machine-readable non-volatile storage medium, having stored thereon program instructions for implementing the method according to any one of Claims 1 - 4, when said machine-readable non-volatile storage medium containing said program is executed on a computing means that is connected to the ultrasound sensors and the heater defined in claim 1.

6. Control unit (20), the control unit (20) having a memory and a processor, the memory having stored therein executable program instructions which, when executed, cause the processor to implement the method according to any one of Claims 1 - 4, when said control unit is connected to the ultrasound sensors and the heater defined in claim 1.

7. Vehicle Selective Catalytic Reduction (SCR) system, comprising a liquid tank (1) for holding exhaust gas treatment fluid, an injection means (3) for injecting exhaust gas treatment fluid into an exhaust pipe, a delivery means (5) for drawing exhaust gas treatment fluid from the liquid tank (1) and supplying it under pressure to the injection means (3), and the control unit (20) according to Claim 6.

## Patentansprüche

1. Verfahren zum Überwachen eines Flüssigkeitspegels in einem Flüssigkeitstank (1) eines Fahrzeugs, wobei der Flüssigkeitstank (1) einen ersten Ultraschallsensor (17) und einen zweiten Ultraschallsensor (25) aufweist, die am Boden (21) des Flüssigkeitstanks (1) montiert sind, wobei der erste Ultraschallsensor (17) dafür ausgelegt ist, den Flüssigkeitspegel im Flüssigkeitstank (1) zu erfassen, indem er Ultraschall in Richtung der Oberseite (23) des Flüssigkeitstanks (1) sendet und ein Echosignal empfängt, und wobei der zweite Ultraschallsensor (25) dafür ausgelegt ist, zu beurteilen, ob Flüssigkeit unterhalb eines ultraschallsendenden Teils des ersten Ultraschallsensors (17) vorhanden ist, indem er Ultraschall entlang des Bodens (21) sendet und ein Echosignal empfängt, wobei das Verfahren die folgenden Schritte umfasst:
Veranlassen des ersten Ultraschallsensors (17), Ultraschall zu senden und ein erstes Echosignal zu empfangen, um den Flüssigkeitspegel im Flüssigkeitstank (1) zu erfassen;
wenn der erste Ultraschallsensor (17) das erste Echosignal während einer Zeitspanne nicht empfangen hat, Veranlassen des zweiten Ultraschallsensors (25), Ultraschall zu senden und ein zweites Echosignal zu empfangen;
Beurteilen, ob der Flüssigkeitstank (1) ein leerer Tank ist, auf der Grundlage des zweiten Echosignals;
Bestimmen, dass der Flüssigkeitstank (1) ein leerer Tank ist, wenn auf der Grundlage des zweiten Echosignals bestimmt wird, dass keine Flüssigkeit unter dem ultraschallsendenden Teil des ersten Ultraschallsensors (17) vorhanden ist;
wobei der Flüssigkeitstank (1) ferner ein Heizelement (19) zum Erwärmen von Flüssigkeit im Flüssigkeitstank (1) umfasst, wobei das Heizelement (19) an einer Position angeordnet ist, die höher als der ultraschallsendende Teil des ersten Ultraschallsensors (17) ist;
**dadurch gekennzeichnet, dass** das Verfahren ferner den folgenden Schritt umfasst:
wenn auf der Grundlage des zweiten Echosignals bestimmt wird, dass sich Flüssigkeit unter dem ultraschallsendenden Teil des ersten Ultraschallsensors (17) befindet, Aktivieren oder Aufrechterhalten der Erwärmung der Flüssigkeit im Flüssigkeitstank (1) durch das Heizelement (19) und Überwachen eines Heizzustands des Heizelements (19);
wenn bestimmt wird, dass der Heizzustand des Heizelements (19) stabiles Heizen ist, Bestimmen, dass der Flüssigkeitstank (1) überfüllt ist, derart, dass es keine Grenzfläche zwischen Abgasbehandlungsfluid und Luft gibt und kein Ultraschall zum Ultraschallsensor zurückreflektiert wird, so dass der erste Ultraschallsensor nicht in der Lage ist, den Flüssigkeitspegel zu erfassen; und
wenn bestimmt wird, dass der Heizzustand des Heizelements (19) instabiles Heizen ist, Bestimmen, dass der Flüssigkeitspegel im Flüssigkeitstank (1) unter den ultraschallsendenden Teil des ersten Ultraschallsensors (17) gefallen ist, aber nicht geleert wurde.

2. Verfahren nach Anspruch 1, **dadurch gekennzeichnet, dass** das Verfahren ferner umfasst: Überwachen des Heizzustands des Heizelements (19) auf der Grundlage einer Heiztemperatur des Heizelement (19); Bestimmen, dass sich das Heizelement (19) in einem instabilen Heizzustand befindet, wenn die Anstiegsrate der Heiztemperatur einen vorbestimmten Temperaturanstiegsratenwert überschreitet und/oder wenn die Heiztemperatur einen vorbestimmten Temperaturwert überschreitet; und Bestimmen, dass sich das Heizelement (19) in einem stabilen Heizzustand befindet, wenn die Anstiegsrate der Heiztemperatur einen vorbestimmten Temperaturanstiegsratenwert nicht überschreitet und/oder wenn die Heiztemperatur einen vorbestimmten Temperaturwert nicht überschreitet.

3. Verfahren nach Anspruch 1, **dadurch gekennzeichnet, dass** das Verfahren ferner umfasst: Überwachen des Heizzustands des Heizelements (19) auf der Grundlage der Variation eines Betriebsstroms des Heizelements (19); Bestimmen, dass sich das Heizelement (19) in einem instabilen Heizzustand befindet, wenn die Änderungsrate des Betriebsstroms einen vorbestimmten Stromänderungsratenwert überschreitet oder wenn der Betriebsstrom einen vorbestimmten Grenzstromwert erreicht; und Bestimmen, dass sich das Heizelement (19) in einem stabilen Heizzustand befindet, wenn die Änderungsrate des Betriebsstroms einen vorbestimmten Stromänderungsratenwert nicht überschreitet oder wenn der Betriebsstrom einen vorbestimmten Grenzstromwert nicht erreicht.

4. Verfahren nach Anspruch 1, **dadurch gekennzeichnet, dass** der Flüssigkeitstank (1) ein Abgasbehandlungsfluidtank in einem SCR-System eines Fahrzeugs ist und die Flüssigkeit im Flüssigkeitstank (1) Abgasbehandlungsfluid ist.

5. Maschinenlesbares, nichtflüchtiges Speichermedium, auf dem Programmanweisungen gespeichert sind, die das Verfahren nach einem der Ansprüche 1 bis 4 implementieren, wenn das maschinenlesbare, nichtflüchtige Speichermedium, das das Programm enthält, auf einem Rechenmittel ausgeführt wird, das mit den Ultraschallsensoren und dem Heizelement nach Anspruch 1 verbunden ist.

6. Steuereinheit (20), wobei die Steuereinheit (20) einen Speicher und einen Prozessor aufweist, wobei im Speicher ausführbare Programmanweisungen gespeichert sind, die bei ihrer Ausführung den Prozessor veranlassen, das Verfahren nach einem der Ansprüche 1 bis 4 zu implementieren, wenn die Steuereinheit mit den Ultraschallsensoren und dem Heizelement nach Anspruch 1 verbunden ist.

7. "Selective Catalytic Reduction"-, SCR-, System für ein Fahrzeug, umfassend einen Flüssigkeitstank (1) zum Vorhalten von Abgasbehandlungsfluid, ein Einspritzmittel (3) zum Einspritzen von Abgasbehandlungsfluid in ein Auspuffrohr, ein Fördermittel (5) zum Entnehmen von Abgasbehandlungsfluid aus dem Flüssigkeitstank (1) und zum Zuführen unter Druck zum Einspritzmittel (3), und die Steuereinheit (20) nach Anspruch 6.

## Revendications

1. Procédé pour surveiller un niveau de liquide dans un réservoir de liquide (1) d'un véhicule, le réservoir de liquide (1) comportant un premier capteur à ultrasons (17) et un second capteur à ultrasons (25) qui sont montés au niveau du fond (21) du réservoir de liquide (1), le premier capteur à ultrasons (17) étant configuré pour détecter le niveau de liquide dans le réservoir de liquide (1) en émettant des ultrasons en direction du sommet (23) du réservoir de liquide (1) et en recevant un signal d'écho, et le second capteur à ultrasons (25) étant configuré pour apprécier si du liquide est présent au-dessous d'une partie d'émission d'ultrasons du premier capteur à ultrasons (17) en émettant des ultrasons le long du fond (21) et en recevant un signal d'écho, le procédé comprenant les étapes suivantes :
le fait de forcer le premier capteur à ultrasons (17) à émettre des ultrasons et à recevoir un premier signal d'écho, afin de détecter le niveau de liquide dans le réservoir de liquide (1) ;
lorsque le premier capteur à ultrasons (17) n'a pas reçu le premier signal d'écho pendant une période de temps, le fait de forcer le second capteur à ultrasons (25) à émettre des ultrasons et à recevoir un second signal d'écho ;
l'appréciation de si le réservoir de liquide (1) est un réservoir vide sur la base du second signal d'écho ; et
la détermination du fait que le réservoir de liquide (1) est un réservoir vide lorsqu'il est déterminé, sur la base du second signal d'écho, qu'aucun liquide n'est présent au-dessous de la partie d'émission d'ultrasons du premier capteur à ultrasons (17) ;
dans lequel le réservoir de liquide (1) comprend en outre un moyen de chauffage (19) pour chauffer le liquide dans le réservoir de liquide (1), le moyen de chauffage (19) étant agencé en une position plus haute que la partie d'émission d'ultrasons du premier capteur à ultrasons (17) ;
**caractérisé en ce que** le procédé comprend en outre les étapes suivantes :
lorsqu'il est déterminé, sur la base du second signal d'écho, que du liquide est présent au-dessous de la partie d'émission d'ultrasons du premier capteur à ultrasons (17), l'activation ou le maintien du chauffage du liquide dans le réservoir de liquide (1) par le moyen de chauffage (19) et la surveillance d'un état de chauffage du moyen de chauffage (19) ;
lorsqu'il est déterminé que l'état de chauffage du moyen de chauffage (19) est un chauffage stable, il est déterminé que le réservoir de liquide (1) est trop rempli de sorte qu'il n'y a pas d'interface entre le fluide de traitement des gaz d'échappement et l'air, et qu'il n'y a pas d'ultrasons réfléchis en retour sur le capteur à ultrasons, de telle sorte que le premier capteur à ultrasons est dans l'incapacité de détecter le niveau de liquide ; et
lorsqu'il est déterminé que l'état de chauffage du moyen de chauffage (19) est un chauffage instable, il est déterminé que le niveau de liquide dans le réservoir de liquide (1) a chuté au-dessous de la partie d'émission d'ultrasons du premier capteur à ultrasons (17) mais que le réservoir n'a pas été vidé.

2. Procédé selon la revendication 1, **caractérisé en ce que** le procédé comprend en outre la surveillance de l'état de chauffage du moyen de chauffage (19) sur la base d'une température de chauffage du moyen de chauffage (19) ; la détermination du fait que le moyen de chauffage (19) est dans un état de chauffage instable lorsque le taux d'augmentation de la température de chauffage excède une valeur de taux d'augmentation de température prédéterminée, et/ou lorsque la température de chauffage excède une valeur de température prédéterminée ; et la détermination du fait que le moyen de chauffage (19) est dans un état de chauffage stable lorsque le taux d'augmentation de la température de chauffage n'excède pas une valeur de taux d'augmentation de température prédéterminée, et/ou lorsque la température de chauffage n'excède pas une valeur de température prédéterminée.

3. Procédé selon la revendication 1, **caractérisé en ce que** le procédé comprend en outre la surveillance de l'état de chauffage du moyen de chauffage (19) sur la base de la variation d'un courant de fonctionnement du moyen de chauffage (19) ; la détermination du fait que le moyen de chauffage (19) est dans un état de chauffage instable lorsque le taux de variation du courant de fonctionnement excède une valeur de taux de variation de courant prédéterminée, ou lorsque le courant de fonctionnement atteint une valeur de courant limite prédéterminée ; et la détermination du fait que le moyen de chauffage (19) est dans un état de chauffage stable lorsque le taux de variation du courant de fonctionnement n'excède pas une valeur de taux de variation de courant prédéterminé, ou lorsque le courant de fonctionnement n'atteint pas une valeur de courant limite prédéterminée.

4. Procédé selon la revendication 1, **caractérisé en ce que** le réservoir de liquide (1) est un réservoir de fluide de traitement des gaz d'échappement dans un système SCR de véhicule, et le liquide dans le réservoir de liquide (1) est un fluide de traitement des gaz d'échappement.

5. Support de stockage non volatile lisible par machine comportant, stockées en son sein, des instructions de programme pour mettre en oeuvre le procédé selon l'une quelconque des revendications 1 à 4, lorsque ledit support de stockage non volatile lisible par machine contenant ledit programme est exécuté sur un moyen informatique qui est connecté aux capteurs à ultrasons et au moyen de chauffage définis selon la revendication 1.

6. Unité de commande (20), l'unité de commande (20) comportant une mémoire et un processeur, la mémoire comportant, stockées en son sein, des instructions de programme exécutables qui, lorsqu'elles sont exécutées, forcent le processeur à mettre en oeuvre le procédé selon l'une quelconque des revendications 1 à 4, lorsque ladite unité de commande est connectée aux capteurs à ultrasons et au moyen de chauffage définis selon la revendication 1.

7. Système de réduction catalytique sélective (SCR) de véhicule, comprenant un réservoir de liquide (1) pour contenir un fluide de traitement des gaz d'échappement, un moyen d'injection (3) pour injecter du fluide de traitement des gaz d'échappement à l'intérieur d'un tuyau d'échappement, un moyen de délivrance (5) pour soutirer du fluide de traitement des gaz d'échappement à partir du réservoir de liquide (1) et pour l'alimenter sous pression sur le moyen d'injection (3), et l'unité de commande (20) selon la revendication 6.
